(19) Europäisches Patentamt
European Patent Office
Office européen des brevets

(11) **EP 4 625 895 A1**

(12) **EUROPEAN PATENT APPLICATION**
published in accordance with Art. 153(4) EPC

(43) Date of publication:
**01.10.2025 Bulletin 2025/40**

(21) Application number: **23905970.2**

(22) Date of filing: **19.12.2023**

(51) International Patent Classification (IPC):
***H04L 25/02*** *(2006.01)*

(52) Cooperative Patent Classification (CPC):
**H04L 5/00; H04L 25/02; H04W 72/0446;**
**H04W 72/0453; H04W 72/231; H04W 72/232**

(86) International application number:
**PCT/CN2023/140023**

(87) International publication number:
**WO 2024/131807 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.12.2022 CN 202211641372**

(71) Applicant: **Huawei Technologies Co., Ltd.**
**Shenzhen, Guangdong 518129 (CN)**

(72) Inventors:
• **YU, Tianhang**
**Shenzhen, Guangdong 518129 (CN)**

• **YANG, Ruonan**
**Shenzhen, Guangdong 518129 (CN)**
• **LUO, Hejia**
**Shenzhen, Guangdong 518129 (CN)**
• **CHEN, Ying**
**Shenzhen, Guangdong 518129 (CN)**
• **LI, Rong**
**Shenzhen, Guangdong 518129 (CN)**
• **WANG, Jun**
**Shenzhen, Guangdong 518129 (CN)**

(74) Representative: **Maiwald GmbH**
**Engineering**
**Elisenhof**
**Elisenstrasse 3**
**80335 München (DE)**

(54) **TRANSMISSION METHOD FOR DEMODULATION REFERENCE SIGNAL, AND RELATED APPARATUS**

(57) This application provides a demodulation reference signal transmission method and a related apparatus, to reduce a resource waste and improve a throughput. The method includes: A communication apparatus determines a first time-frequency resource. The first time-frequency resource is a resource that is in at least one resource block RB and that is for transmission of a first-type demodulation reference signal DMRS, frequency domain density of the first-type DMRS is 1/N of frequency domain density of a second-type DMRS, a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, where N is an integer greater than 1, and M is an integer greater than 0. The communication apparatus sends or receives a first DMRS based on the first time-frequency resource, where the first DMRS belongs to the first-type DMRS.

400

FIG. 4

## Description

This application claims priority to Chinese Patent Application No. 202211641372.3, filed with the China National Intellectual Property Administration on December 20, 2022 and entitled "DEMODULATION REFERENCE SIGNAL TRANSMISSION METHOD AND RELATED APPARATUS", which is incorporated herein by reference in its entirety.

## TECHNICAL FIELD

This application relates to the communication field, and in particular, to a demodulation reference signal transmission method and a related apparatus.

## BACKGROUND

In a wireless communication system, a demodulation reference signal (demodulation reference signal, DMRS) is usually used to perform channel estimation, to improve receiving performance.

Currently, to better estimate a frequency-selective fading channel, a time-frequency resource for transmission of a DMRS uses a denser comb structure in frequency domain, and has sparser density in time domain. In some communication scenarios, for example, in scenarios such as a non-terrestrial network (non-terrestrial network, NTN) and a terrestrial high frequency, a frequency selective characteristic of a channel is weak. If an existing demodulation reference signal is still used for channel estimation, a resource waste is caused.

## SUMMARY

A This application provides a demodulation reference signal transmission method and a related apparatus, to reduce a resource waste.

According to a first aspect, a demodulation reference signal transmission method is provided, and may be applied to a communication apparatus, for example, may be performed by a terminal device, or may be performed by a component (like a chip or a chip system) disposed in the terminal device, or may be implemented by a logical module or software that can implement all or some functions of the terminal device, or may be performed by a network device, or may be performed by a component (like a chip or a chip system) disposed in the network device, or may be implemented by a logical module or software that can implement all or some functions of the network device. This is not limited in this application.

For example, the method includes: determining a first time-frequency resource, where the first time-frequency resource is a resource that is in at least one resource block (resource block, RB) and that is for transmission of a first-type demodulation reference signal DMRS, frequency domain density of the first-type DMRS is 1/N of frequency domain density of a second-type DMRS, and a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, where N is an integer greater than 1, and M is an integer greater than 0; and sending or receiving a first DMRS based on the first time-frequency resource, where the first DMRS belongs to the first-type DMRS.

Based on this method, the communication apparatus determines the time-frequency resource whose frequency domain density is 1/N of the frequency domain density of the second-type DMRS, and whose quantity of symbols occupied in the at least one RB is M times the quantity of symbols occupied by the second-type DMRS in the at least one RB, to perform transmission of the first-type DMRS, and sends or receives the first DMRS based on the determined time-frequency resource (where the first DMRS belongs to the first-type DMRS). If M=1, only the frequency domain density in the time-frequency resource for transmission of the first-type DMRS in the at least one RB decreases. Therefore, the communication apparatus may use more time-frequency resources to perform data transmission. This not only reduces a resource waste, but also improves a throughput. If M≠1, a quantity of time domain symbols in the time-frequency resource for transmission of the first-type DMRS in the at least one RB increases. In this way, when the communication apparatus uses the first-type DMRS to perform channel estimation, channel estimation precision can be improved, and receiving performance of the communication apparatus can be improved.

With reference to the first aspect, in some implementations of the first aspect, N=M. In this way, total overheads of the first-type DMRS are the same as total overheads of the second-type DMRS, so that it can be ensured that data transmission performance does not change while channel estimation accuracy is improved.

With reference to the first aspect, in some implementations of the first aspect, N>M. In this way, overheads of the first-type DMRS can be reduced, and a throughput gain can be obtained when a channel estimation accuracy loss is small.

With reference to the first aspect, in some implementations of the first aspect, the method further includes: receiving first information, where the first information indicates a first coefficient N and a second coefficient M.

With reference to the first aspect, in some implementations of the first aspect, the method further includes: sending first information, where the first information indicates a first coefficient N and a second coefficient M.

Optionally, during downlink transmission, the communication apparatus serves as a terminal device to receive the first information and receive the first DMRS; and the communication apparatus serves as a network device to send the first information and send the first DMRS.

Optionally, during uplink transmission, the communication apparatus serves as a terminal device to receive the first information and send the first DMRS; and the communication apparatus serves as a network device to send the first information and receive the first DMRS.

With reference to the first aspect, in some implementations of the first aspect, the first information includes the first coefficient N and the second coefficient M.

With reference to the first aspect, in some implementations of the first aspect, the first information includes a first parameter value, and the first parameter value corresponds to the first coefficient N and the second coefficient M.

With reference to the first aspect, in some implementations of the first aspect, the first parameter value includes an index value of a modulation and coding scheme MCS or a value of an elevation angle of satellite communication.

It should be understood that the first parameter value may further include a satellite orbit height.

A plurality of indication manners of the first coefficient N and the second coefficient M may increase flexibility of indicating the first coefficient and the second coefficient.

With reference to the first aspect, in some implementations of the first aspect, the first time-frequency resource includes a plurality of symbols in time domain, and the plurality of symbols are contiguously distributed in time domain.

On this basis, the contiguous distribution of the time domain symbols occupied by the first-type DMRS facilitates joint channel estimation, and improves channel estimation performance in a low signal-to-noise ratio.

With reference to the first aspect, in some implementations of the first aspect, the first time-frequency resource includes a plurality of symbols in time domain, and the plurality of symbols are distributed at intervals in time domain.

The manner of distributing the plurality of symbols at intervals may be used to track a rapid change of a channel.

With reference to the first aspect, in some implementations of the first aspect, an index $k1$ of a subcarrier included in the first time-frequency resource in frequency domain satisfies:

$$k1 = N \cdot (4n + 2k') + \Delta.$$

$n$ is a natural number, a value of $k'$ is 0 or 1, and $\Delta$ is an integer greater than or equal to 0 and less than or equal to 2N-1.

For example, a value of $\Delta$ may be determined based on a port number.

With reference to the first aspect, in some implementations of the first aspect, an index $k2$ of a subcarrier included in the first time-frequency resource in frequency domain satisfies:

$$k2 = N \cdot 6n + k' + \Delta.$$

$n$ is a natural number, a value of $k'$ is 0 or 1, and $\Delta$ is an integer greater than or equal to 0 and less than or equal to 2N-1.

For example, a value of $\Delta$ may be determined based on a port number.

With reference to the first aspect, in some implementations of the first aspect, an index $l$ of the symbol included in the first time-frequency resource in time domain satisfies:

$$l = \bar{l} + M \cdot l' + \tilde{l}.$$

A value of $l'$ is 0 or 1, $\bar{l}$ is a natural number less than M, and a value of $\tilde{l}$ is configured by the communication apparatus.

For example, the value of $\tilde{l}$ may be indicated by high-level signaling, to represent a position at which a start position of a slot is offset by $\tilde{l}$. For example, a value of a front-loaded DMRS $\bar{l}$ is related to a mapping type of a physical downlink shared channel (physical downlink shared channel, PDSCH). For a mapping type A, a value of $\bar{l}$ may be set to 2 or 3. For a mapping type B, a value of $\bar{l}$ may be set to 0.

With reference to the first aspect, in some implementations of the first aspect, the first information is carried in one or more of the following signaling: a broadcast message, radio resource control (radio resource control, RRC) signaling, or downlink control information (downlink control information, DCI).

According to a second aspect, a communication apparatus is provided, to perform the method according to any one of the possible implementations in the first aspect. Specifically, the apparatus includes a module configured to perform the method according to any one of the possible implementations in the first aspect.

In a design, the communication apparatus may include modules that are in one-to-one correspondence with the method/operation/step/action described in the first aspect. The modules may be implemented by a hardware circuit, software, or a combination of the hardware circuit and the software.

In another design, the communication apparatus is a communication chip, and the communication chip may include an input circuit or interface configured to send information or data, and an output circuit or interface configured to receive information or data.

In another design, the communication apparatus is a terminal device, and the terminal device may include a transmitter machine configured to send information or data, and a receiver machine configured to receive information or data.

In another design, the communication apparatus is a network device, and the network device may include a transmitter machine configured to send information or data, and a receiver machine configured to receive information or data.

In another design, the communication apparatus is configured to perform the method in any one of the possible implementations in the first aspect, and the communication apparatus can be disposed in a terminal device or a network device.

According to a third aspect, another communication apparatus is provided. The communication apparatus includes a processor, configured to invoke a computer program from a memory and run the computer program, to enable the communication apparatus to perform the method according to any one of the possible implementations in the first aspect.

Optionally, there may be one or more processors.

Optionally, the communication apparatus further includes one or more memories.

Optionally, the communication apparatus further includes a transmitter machine (transmitter) and a receiver machine (receiver). The transmitter machine and the receiver machine may be separately disposed, or may be integrated together and referred to as a transceiver machine (transceiver).

According to a fourth aspect, a computer program product is provided. The computer program product includes a computer program (or may be referred to as code or instructions). When the computer program is run, a computer is enabled to perform the method according to any one of the possible implementations in the first aspect.

According to a fifth aspect, a computer-readable storage medium is provided. The computer-readable storage medium stores a computer program (or may be referred to as code or instructions). When the computer program is run on a computer, the computer is enabled to perform the method according to any one of the possible implementations in the first aspect.

According to a sixth aspect, a chip system is provided. The chip system includes at least one processor, configured to support a function in the possible implementations in the first aspect, for example, receiving or processing data in the foregoing method.

In a possible design, the chip system further includes a memory. The memory is configured to store program instructions and data. The memory is located inside the processor or outside the processor.

Optionally, the chip system may include a chip, or may include a chip and another discrete component.

According to a seventh aspect, a communication system is provided. The communication system includes at least one communication apparatus, configured to implement the method according to any one of the possible implementations in the first aspect.

In a possible design, the communication system may further include another device that interacts with at least one communication apparatus.

**BRIEF DESCRIPTION OF DRAWINGS**

FIG. 1 is a diagram of a communication system applicable to a method according to an embodiment of this application;

FIG. 2 is a diagram of a front-loaded DMRS type 1 specified in NR;

FIG. 3 is a diagram of a front-loaded DMRS type 2 specified in NR;

FIG. 4 is a schematic flowchart of a DMRS transmission method according to an embodiment of this application;

FIG. 5 is a diagram of a first-type DMRS pattern according to an embodiment of this application;

FIG. 6 is a diagram of another first-type DMRS pattern according to an embodiment of this application;

FIG. 7 is a diagram of still another first-type DMRS pattern according to an embodiment of this application;

FIG. 8 is a diagram of yet another first-type DMRS pattern according to an embodiment of this application;

FIG. 9 is a diagram of yet another first-type DMRS pattern according to an embodiment of this application;

FIG. 10 is a diagram of a plurality of manners of distribution at intervals according to an embodiment of this application;

FIG. 11 is a diagram of a frequency domain offset manner according to an embodiment of this application;

FIG. 12 is a diagram of a method for defining an orthogonal port according to an embodiment of this application;

FIG. 13 is a diagram of another method for defining an orthogonal port according to an embodiment of this application;

FIG. 14 is a schematic flowchart of another DMRS transmission method according to an embodiment of this application;

FIG. 15 is a diagram of block error rate performance comparison according to an embodiment of this application;

FIG. 16 is a diagram of a throughput gain according to an embodiment of this application;

FIG. 17 is a block diagram of a communication apparatus according to an embodiment of this application; and

FIG. 18 is a block diagram of another communication apparatus according to an embodiment of this application.

## DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G mobile communication system, a new radio (new radio, NR) system or another evolved communication system, a next generation mobile communication system beyond a 5G communication system, a 6th generation (6th generation, 6G) communication system, or a future communication system.

The technical solutions provided in this application may be further applied to a non-terrestrial communication network (non-terrestrial network, NTN) communication system like a satellite communication system. The NTN communication system may be integrated with a wireless communication system.

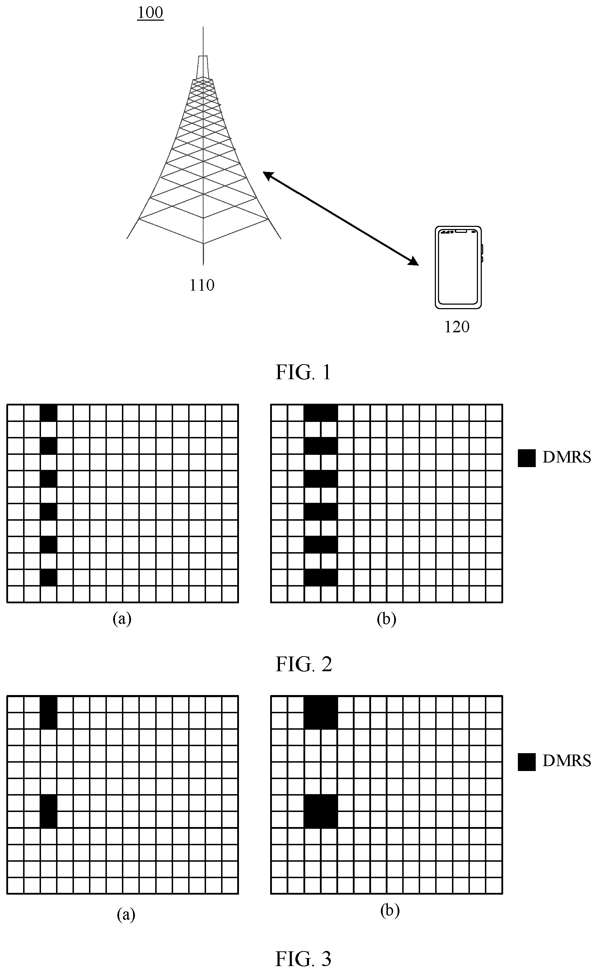

For ease of understanding of embodiments of this application, a communication system to which embodiments of this application are applicable is first described in detail with reference to FIG. 1.

FIG. 1 is a diagram of a communication system 100 applicable to a method according to an embodiment of this application. As shown in FIG. 1, the communication system 100 includes at least two communication devices, for example, a network device 110 and a terminal device 120. The network device 110 and the terminal device 120 can perform data communication via a wireless connection. Specifically, the network device 110 may send downlink data to the terminal device 120. The terminal device 120 may also send uplink data to the network device 110.

In this embodiment of this application, the terminal device (for example, the terminal device 120 shown in FIG. 1) is a device with a wireless transceiver function, and may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or a vehicle-mounted device with a wireless connection function. Currently, the terminal may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a sensor terminal, a sensing terminal, a device integrating communication and sensing, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an uncrewed aerial vehicle, a terminal in a 5G network, a terminal in a future evolved public land mobile network (public land mobile network, PLMN), and the like. A specific technology, a device form, and a name of the terminal are not limited in embodiments of this application.

In this application, a network device may be a device (for example, the network device 110 shown in FIG. 1) configured to communicate with the terminal, or may be a device that enables the terminal to access a wireless network. The network device may be a node in a radio access network. The network device may be a base station (base station), an evolved NodeB (evolved NodeB, eNodeB), a transmission reception point (transmission reception point, TRP), a home base station (for example, a home evolved NodeB, or a home NodeB, HNB), a wireless fidelity (wireless fidelity, Wi-Fi) access point (access point, AP), a next generation NodeB (next generation NodeB, gNB), a mobile switching center, a next generation NodeB (next generation NodeB, gNB) in a 5G mobile communication system, a next generation base station in a 6G mobile communication system, a base station in a future mobile communication system, or the like. The network device may alternatively be a module or a unit that completes some functions of the base station, for example, may alternatively be a central unit (central unit, CU), a distributed (distributed unit, DU), a remote radio unit (remote radio unit, RRU), or a baseband unit (baseband unit, BBU). Alternatively, the network device may be a device that provides a base station function in a device to device (device to device, D2D) communication system, uncrewed aerial vehicle communication, a vehicle to vehicle (vehicle to vehicle, V2V) communication system, a machine to machine (machine to machine, M2M) communication system, an internet of things (internet of things, IoT) communication system, or the like. Alternatively, the network device may be a network device in an NTN, in other words, the network device may be deployed on a high altitude platform or a satellite. The network device may be a macro base station, or may be a micro base station or an indoor base station, or may be a relay node, a donor node, or the like. Certainly, the network device may alternatively be a node in a core network. A specific technology, a device form, and a name used by the network device are not limited in embodiments of this application.

In embodiments of this application, a function of the network device may alternatively be performed by a module (for example, a chip) in the network device, or may be performed by a control subsystem having the function of the network device. The control subsystem including the function of the network device herein may be a control center in the foregoing terminal application scenarios such as a smart grid, industrial control, intelligent transportation, a smart city, and an integrated sensing and communication system. A function of the terminal may be performed by a module (for example, a chip or a modem) in the terminal, or may be performed by an apparatus including the function of the terminal.

It should be noted that roles of the network device and the terminal may be relative. For example, a network device #1 may be configured as a mobile base station. For terminals that access a network through the network device #1, the network device #1 is a base station. However, for a network device #2 that communicates with the network device #1 through a wireless air interface protocol, the network device #1 is a terminal. Certainly, the network device #1 may alternatively communicate with the network device #2 through an interface protocol between base stations. In this case, the network device #1 is also a base station relative to the network device #2.

The network device and the terminal device in this application may be deployed on land, including indoor devices, outdoor devices, handheld devices, wearable devices, or vehicle-mounted devices; or may be deployed on water (for example, on a ship); or may be deployed in air (for example, on an airplane, a balloon, and a satellite). Application scenarios of the network device and the terminal are not limited in this application.

It should be understood that FIG. 1 is merely a simplified diagram for ease of understanding. The communication system 100 may further include another device, which is not shown in FIG. 1.

For example, when the terminal device and the network device in FIG. 1 perform uplink transmission and downlink transmission, while sending data, a transmit end usually sends a reference signal (for example, a demodulation reference signal (demodulation reference signal, DMRS)) used for radio channel estimation, so that a receive end performs channel equalization to eliminate channel impact, and then demodulates and decodes data obtained after the channel equalization, thereby effectively improving receiving performance of the communication device.

Currently, to better estimate a frequency-selective fading channel, when a DMRS pattern is designed in an NR standard, a denser comb structure is used in frequency domain, and density in time domain is sparser. The following describes two types of front-loaded DMRSs with reference to FIG. 2 and FIG. 3.

FIG. 2 is a diagram of a front-loaded DMRS type 1 specified in NR. (a) in FIG. 2 shows a single-symbol DMRS pattern, in which DMRSs are distributed at intervals in frequency domain with density of 1/2. (b) in FIG. 2 shows a double-symbol DMRS pattern, DMRS are distributed at intervals in frequency domain with density of 1/2.

FIG. 3 is a diagram of a front-loaded DMRS type 2 specified in NR. (a) in FIG. 3 shows a single-symbol DMRS pattern, in which four DMRS symbols are inserted into 12 REs with frequency domain density of 1/3. (b) in FIG. 3 shows a double-symbol DMRS pattern, in which eight DMRS symbols are inserted into 24 REs with frequency domain density of 1/3.

In some embodiments, resource elements (resource elements, REs) occupied by the DMRSs shown in FIG. 2 and FIG. 3 may be determined according to the following formula (1) and formula (2):

$$k = \begin{cases} 4n + 2k' + \Delta, & \text{type 1} \\ 6n + k' + \Delta, & \text{type 2} \end{cases} \qquad (1)$$

$$l = \bar{l} + l' \qquad (2)$$

k represents an index of the DMRS in frequency domain, l represents an index of the DMRS in time domain, and n is a natural number.

After the resource elements occupied by the DMRS are determined, a DMRS sequence may be mapped to each resource element (which may be represented as RE($k,l$)) according to the following formula (3):

$$a_{k,l}^{(p,\mu)} = \beta_{PDSCH}^{DMRS} w_f(k') w_t(l') r(2n + k') \qquad (3)$$

$a_{k,l}^{(p,\mu)}$ represents a DMRS sequence for which a port number is $p$ and a subcarrier spacing is $\mu$, and that is mapped to the RE($k,l$). $\beta_{PDSCH}^{DMRS}$ is a DMRS scale factor (that is, $\beta_{PDSCH}^{DMRS}$ indicates a ratio of energy per resource element (energy per resource element, EPRE) of a physical downlink shared channel (physical downlink shared channel, PDSCH) to a DMRS EPRE), $w_f(k')$ is a code division multiplexing coefficient in frequency domain, $w_t(l')$ is a code division multiplexing coefficient in time domain, and $r(2n + k')$ is a pseudo-random sequence.

For values of frequency-domain-related parameters in the foregoing formula (1) to formula (3), refer to Table (Table)-7.4.1.1.2-1 (Type 1) and Table-7.4.1.1.2-2 (Type 2) in the 3rd generation partnership project (3rd generation partnership project, 3GPP) technical specification (specification technology, TS) 38.211. In other words, different tables may be selected for the values of the frequency-domain-related parameters based on different configuration types, to obtain corresponding parameters.

For values of time-domain-related parameters in the foregoing formula (1) to formula (3), refer to Table-7.4.1.1.2-3 (single-symbol DMRS), Table-7.4.1.1.2-4 (double-symbol DMRS), and Table-7.4.1.1.2-5 (about $l'$ and an antenna port) in TS 38.211. In other words, different tables may be selected for the values of time-domain-related parameters based on a single-symbol DMRS and a double-symbol DMRS, to obtain corresponding parameters.

After the values of time-domain-related parameters and frequency-domain-related parameters are obtained in the foregoing manner, a resource occupied by the DMRS may be determined with reference to descriptions of calculation manners of $k$ and $l$ in the conventional technology. Details are not described in this application.

In some scenarios with a low signal-to-noise ratio, for example, in scenarios such as an NTN scenario and a terrestrial high frequency scenario, a communication channel changes to a line of sight (line of sight, LOS) channel, a frequency selective characteristic becomes weak, and a DMRS with excessively sparse frequency domain density may not be needed for channel estimation. In addition, a path loss in this scenario is large and a link budget is poor. As a result, receiving performance deteriorates.

In view of this, an embodiment of this application provides a DMRS transmission method and a related apparatus. A first time-frequency resource for transmission of a first-type DMRS on at least one resource block RB is determined, to perform transmission of the first-type DMRS based on the first time-frequency resource, where frequency domain density of the first-type DMRS is 1/N (where N is an integer greater than 1) of frequency domain density of a second-type DMRS, a quantity of symbols occupied by the first-type DMRS in the at least one RB is M times a quantity of symbols occupied by the second-type DMRS in the at least one RB (where M is an integer greater than 0). In this way, if M=1, only the frequency domain density in the time-frequency resource for transmission of the first-type DMRS in the at least one RB decreases, and in comparison with smaller total overheads of the second-type DMRS, the communication apparatus may therefore use more time-frequency resources to perform data transmission. This not only reduces a resource waste, but also improves a throughput. If M≠1, a quantity of symbols occupied by the first-type DMRS in the at least one RB in time domain increases. In this way, when the communication apparatus uses the first-type DMRS to perform channel estimation, channel estimation precision can be improved, and receiving performance of the communication apparatus can be improved.

It should be understood that the DMRSs shown in FIG. 2 and FIG. 3 may belong to the second-type DMRS in embodiments of this application.

Before the DMRS transmission method provided in this application is described, the following descriptions are first provided.

First, in this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating another information, and there is an association relationship between the another information and the to-be-indicated information. Alternatively, only a part of the to-be-indicated information may be indicated, and another part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

Second, in embodiments of this specification, various terms and English abbreviations, such as DMRS, first-type DMRS, second-type DMRS, are examples provided for the convenience of descriptions and should not constitute any limitation to this application. This application does not exclude a possibility of defining another term that can implement a same or similar function in an existing or a future protocol.

Third, the first, the second, and various numerical numbers in embodiments shown below are merely distinguished for ease of descriptions, and are not intended to limit the scope of embodiments of this application. For example, different DMRSs are differentiated.

Fourth, in the following embodiments, "predefined" may be implemented by prestoring corresponding code or a corresponding table in a device (for example, including a terminal device and a network device), or may be implemented in another manner that may indicate related information. A specific implementation of "predefined" is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, "plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

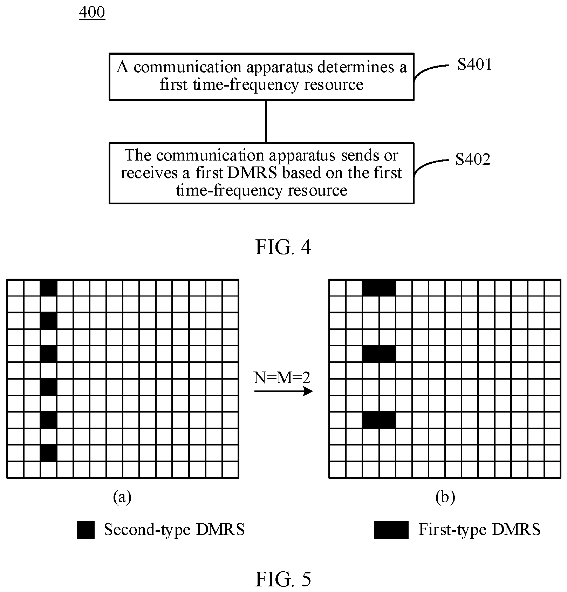

With reference to FIG. 4 to FIG. 14, the following describes in detail a DMRS transmission method provided in embodiments of this application. The transmission method may be applied to the communication system 100 shown in FIG. 1, but embodiments of this application are not limited thereto.

In a flowchart shown in FIG. 4, the method is described from a perspective of a communication apparatus. The communication apparatus may be the network device 110 shown in FIG. 1, or the terminal device 120 shown in FIG. 1. It should be understood that although an embodiment shown in FIG. 4 is described by using a communication apparatus as an example, this does not constitute any limitation on an execution body of the method. The method provided in embodiments of this application can be performed provided that a program that records code of the method provided in embodiments of this application can be run. For example, the communication apparatus may alternatively be replaced by a component (for example, a chip or a chip system) disposed in a terminal device or a network device, or another functional module that can invoke and execute a program.

FIG. 4 is a schematic flowchart of a DMRS transmission method 400 according to an embodiment of this application. As shown in FIG. 4, the method 400 includes S401 and S402. The following describes in detail the steps in the method 400.

S401: A communication apparatus determines a first time-frequency resource.

The first time-frequency resource is a resource that is in at least one RB and that is for transmission of a first-type DMRS, frequency domain density of the first-type DMRS is 1/N of frequency domain density of a second-type DMRS, a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, where N is an integer greater than 1, and M is an integer greater than 0.

In this embodiment of this application, 12 contiguous subcarriers in frequency domain and 14 contiguous symbols in time domain are referred to as one RB. A specific quantity of RBs may be determined based on a transmission requirement of a user.

Optionally, a value of M may also be 1, in other words, the first-type DMRS and the second-type DMRS occupy a same quantity of symbols in the at least one RB. In this way, more time-frequency resources can be used for data transmission in the at least one RB, to obtain a throughput gain.

Optionally, N and M may be the same, or may be different.

For example, when N=M, total overheads of the first-type DMRS are the same as total overheads of the second-type DMRS are the same. In this way, data transmission performance can be ensured while channel estimation performance is improved.

For example, when N≠M, when reliability of a communication link is high, N>M may be designed; or when reliability of a communication link is low, N<M may be designed. In this design, data transmission performance can be minimized while channel estimation performance is improved.

S402: The communication apparatus sends or receives a first DMRS based on the first time-frequency resource.

The first DMRS belongs to the first-type DMRS. In other words, a RE used for transmission of the first DMRS belongs to the first time-frequency resource. It should be understood that one subcarrier in frequency domain and one symbol (symbol) in time domain are referred to as one RE.

In this embodiment of this application, the time-frequency resource whose frequency domain density is 1/N of the frequency domain density of the second-type DMRS, and whose quantity of symbols occupied in the at least one RB is M times the quantity of symbols occupied by the second-type DMRS in the at least one RB, and that is for transmission of the first-type DMRS is determined, and the first DMRS (where the first DMRS belongs to the first-type DMRS) is sent or received based on the determined time-frequency resource. If M=1, only the frequency domain density in the time-frequency resource for transmission of the first-type DMRS in the at least one RB decreases. Therefore, the communication apparatus may use more time-frequency resources to perform data transmission. This not only reduces a resource waste, but also improves a throughput. If M≠1, a quantity of time domain symbols in the time-frequency resource for transmission of the first-type DMRS in the at least one RB increases. In this way, when the communication apparatus uses the first-type DMRS to perform channel estimation, channel estimation precision can be improved, and receiving performance of the communication apparatus can be improved.

The following uses an example in which the DMRS pattern shown in (a) in FIG. 2 is used as the second-type DMRS pattern. With reference to FIG. 5 to FIG. 8, a corresponding first-type DMRS pattern when values of N and M are the same or different is described, where the DMRS pattern may be understood as a time-frequency resource occupied by a DMRS in the at least one RB, and a first-type DMRS pattern provided in embodiments of this application when N=M=2, N=M=4, and N=2 and M=4 is described.

FIG. 5 is a diagram of a first-type DMRS pattern according to an embodiment of this application. As shown in (a) in FIG. 5, a second-type DMRS occupies one symbol (where an index of the symbol is 2) in one RB, and frequency domain density is 1/2. When N=M=2, a quantity of symbols occupied by the second-type DMRS in one RB changes to twice an original quantity of symbols, and frequency domain density changes to 1/2 of original frequency domain density, to obtain a first-type DMRS pattern shown in (b) in FIG. 5. The first-type DMRS occupies four symbols (where indexes of the symbols are 2, 3, 4, and 5) in one RB, and frequency domain density is 1/4.

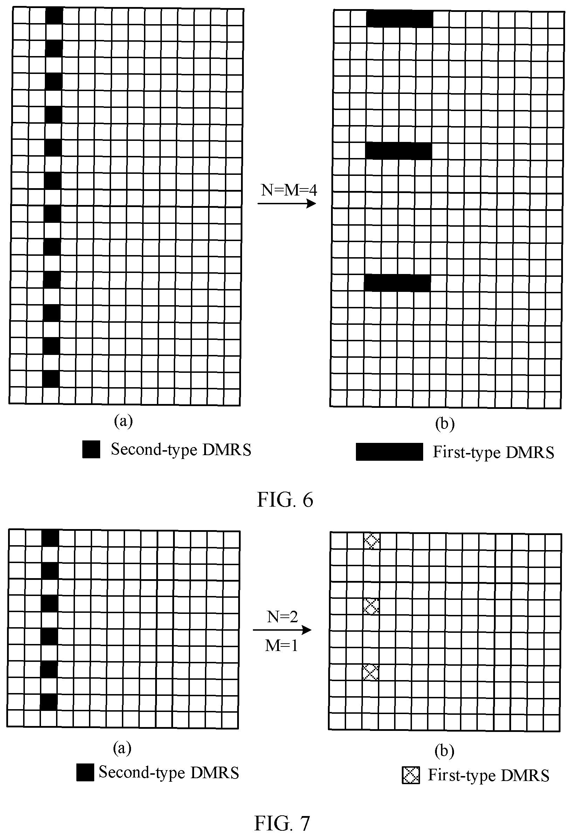

FIG. 6 is a diagram of another first-type DMRS pattern according to an embodiment of this application. As shown in (a) in FIG. 6, a second-type DMRS occupies one symbol (where an index of the symbol is 2) in two RBs, and frequency domain density is 1/2. When N=M=4, a quantity of symbols occupied by the second-type DMRS in two RBs changes to four times an original quantity of symbols, and frequency domain density changes to 1/4 of original frequency domain density, to obtain a first-type DMRS pattern shown in (b) in FIG. 6. The first-type DMRS occupies four symbols (where indexes of the symbols are 2, 3, 4, and 5) in two RBs, and frequency domain density is 1/8.

With reference to (a) and (b) in FIG. 5 and (a) and (b) in FIG. 6, it can be learned that when N=M, a quantity of resource elements occupied by the first-type DMRS is the same as a quantity of resource elements occupied by the second-type DMRS. In other words, a quantity of REs used for data transmission remains unchanged, and data transmission performance does not change.

It should be understood that a start position of a symbol occupied by the first-type DMRS in time domain shown in (b) in FIG. 5 may be the same as or different from a start position of a symbol occupied by the second-type DMRS in time domain shown in (a) in FIG. 5. Similarly, a start position of a symbol occupied by the first-type DMRS in time domain shown in (b) in FIG. 6 may be the same as or different from a start position of a symbol occupied by the second-type DMRS in time domain shown in (a) in FIG. 6.

FIG. 7 is a diagram of still another first-type DMRS pattern according to an embodiment of this application. As shown in (a) in FIG. 7, a second-type DMRS occupies one symbol (where an index of the symbol is 2) in one RB, and frequency domain density is 1/2. When N=2 and M=1, frequency domain density of the second-type DMRS changes to 1/2 of original frequency domain density, and a quantity of symbols occupied by the second-type DMRS in one RB changes to one time (that is, a quantity of symbols occupied in one RB remains unchanged) an original quantity of symbols, to obtain a first-type DMRS pattern shown in (b) in FIG. 7. The first-type DMRS occupies one symbol (where an index of the symbol is 2) in one RB, and frequency domain density is 1/4.

With reference to (a) and (b) in FIG. 7, it can be learned that when N>M, a quantity of resource elements occupied by the first-type DMRS is less than a quantity of resource elements occupied by the second-type DMRS, but a quantity of REs used for data transmission in resource blocks shown in (b) in FIG. 7 is greater than a quantity of RBs used for data transmission in resource blocks shown in (a) in FIG. 7, so that data transmission performance is improved.

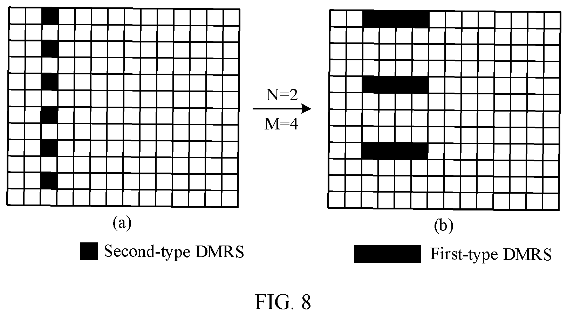

FIG. 8 is a diagram of yet another first-type DMRS pattern according to an embodiment of this application. As shown in (a) in FIG. 8, a second-type DMRS occupies one symbol (where an index of the symbol is 2) in one RB, and frequency domain density is 1/2. When N=2 and M=4, frequency domain density of the second-type DMRS changes to 1/2 of original frequency domain density, and a quantity of symbols occupied by the second-type DMRS in time domain changes to four times an original quantity of symbols, to obtain a first-type DMRS pattern shown in (b) in FIG. 8. The first-type DMRS occupies four symbols (where indexes of the symbols are 2, 3, 4, and 5) in one RB, and frequency domain density is 1/4.

With reference to (a) and (b) in FIG. 8, it can be learned that when N<M, a quantity of resource elements occupied by the first-type DMRS is greater than a quantity of resource elements occupied by the second-type DMRS, but a quantity of REs used for data transmission in resource blocks shown in (b) in FIG. 8 is less than a quantity of RBs used for data transmission in resource blocks shown in (a) in FIG. 8, resulting in deterioration of data transmission performance.

It should be understood that a start position of a symbol occupied by the first-type DMRS in time domain shown in (b) in FIG. 7 may be the same as or different from a start position of a symbol occupied by the second-type DMRS in time domain shown in (a) in FIG. 7. Similarly, a start position of a symbol occupied by the first-type DMRS in time domain shown in (b) in FIG. 8 may be the same as or different from a start position of a symbol occupied by the second-type DMRS in time domain shown in (a) in FIG. 8.

The examples provided in FIG. 5 to FIG. 8 belong to the first-type DMRS that is determined based on a DMRS pattern defined in an NR standard and that is used as the second-type DMRS. It should be noted that the method provided in embodiments of this application is also applicable to another type of DMRS pattern.

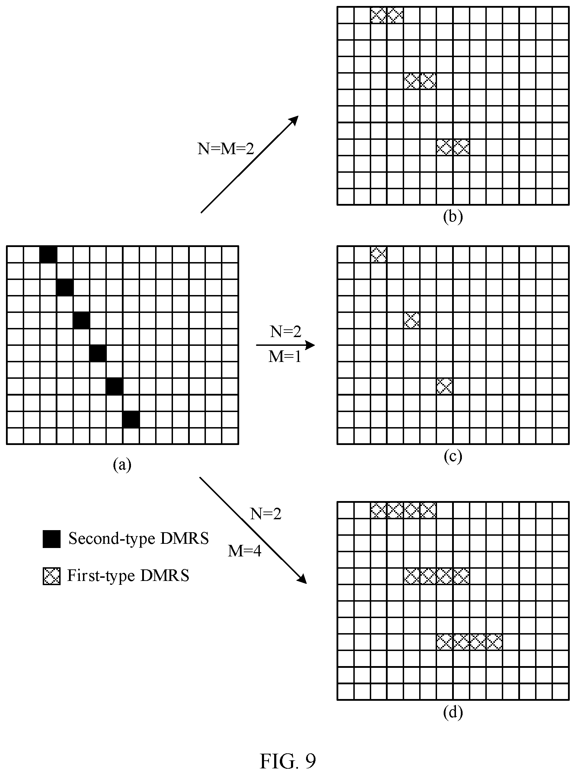

For example, if a second-type DMRS pattern is a pattern shown in (a) in FIG. 9, when N=M=2, a first-type DMRS pattern is shown in (b) in FIG. 9; when N=2 and M=1, the first-type DMRS pattern is shown in (c) in FIG. 9; and when N=2 and M=4, the first-type DMRS pattern is shown in (b) in FIG. 9.

In an optional embodiment, the method 400 further includes: The communication apparatus receives first information, where the first information indicates a first coefficient N and a second coefficient M.

In an optional embodiment, the method 400 further includes: The communication apparatus sends the first information, where the first information indicates a first coefficient N and a second coefficient M.

The first information may be carried in one or more pieces of the following signaling: a broadcast message (for example, a master information block (master information block, MIB) message and a system information block (system information block, SIB) message), RRC signaling, or DCI.

Optionally, the first information indication may indicate the first coefficient and the second coefficient in the following two implementations.

In a first possible implementation, the first information includes the first coefficient N and the second coefficient M. For example, a field is added to a broadcast message or RRC signaling to indicate N and M.

In a second possible implementation, the first information includes a first parameter value, and the first parameter value corresponds to the first coefficient N and the second coefficient M. For example, the communication apparatus predefines a correspondence between different parameter values and a plurality of groups of coefficients, where each of the plurality of groups of coefficients includes one first coefficient and one second coefficient. In this way, the communication apparatus may determine, from the predefined correspondence based on the first parameter value included in the first information, a first coefficient and a second coefficient that correspond to the first parameter value.

Optionally, the first parameter value may include an index value of a modulation and coding scheme (modulation and coding scheme, MCS) or a value of an elevation angle of satellite communication.

For example, when the first parameter value is the index value of the MCS, the communication apparatus may predefine a correspondence between different index values of the MCS and a plurality of groups of coefficients {N,M}, and then determine N and M based on the index value of the MCS. For example, when the index values of the MCS are 0 to 7, a corresponding group of {N1,M1} indicates that the communication apparatus uses the first-type DMRS to perform channel estimation. For example, N1=M1=2, so that channel estimation performance can be improved. When the index values of the MCS are greater than 7, a corresponding group of {N2,M2} indicates that the communication apparatus uses the first-type DMRS to perform channel estimation. For example, N2=2, and M2=1. A throughput gain is obtained at the cost of a small amount of channel estimation performance.

For example, when the first parameter value is the value of the elevation angle of the satellite communication, the communication apparatus may predefine a correspondence between values of different elevation angles of satellite communication and the plurality of groups of coefficients {N,M}, and then determine used N and M based on the values of the elevation angle of the satellite communication. For example, when the elevation angle of the satellite communication is less than or equal to a first threshold and a satellite orbit height is greater than or equal to a first height, a first group of coefficients {N1,M1} is used; and if the elevation angle of the communication is greater than a first threshold and less than a second threshold, and a satellite orbit height is greater than or equal to a first height, a second group of parameters {N2,M2} is used, and the two groups of coefficients may respectively be: N1=M1=2, and {N2=2,M2=1}.

In an optional embodiment, the first time-frequency resource includes a plurality of symbols in time domain, and the plurality of symbols are contiguously distributed in time domain.

With reference to the examples shown in FIG. 5, FIG. 6, and FIG. 8, the first-type DMRS includes a plurality of symbols in time domain, and the plurality of symbols are contiguously distributed in time domain.

In an optional embodiment, the first time-frequency resource includes a plurality of symbols in time domain, and the plurality of symbols are distributed at intervals in time domain.

That the plurality of symbols are distributed at intervals in time domain may be understood as that the plurality of symbols are not contiguously distributed in time domain, and the distribution at intervals may also include at least two symbols that are contiguously distributed.

It should be understood that the foregoing distribution at intervals may be distribution at even intervals, or may be distribution at uneven intervals. The distribution at even intervals means that a plurality of offsets $B_t$ are all the same, and the distribution at uneven intervals means that a plurality of offsets are not completely the same. The offset $B_t$ (where $B_t$ is an integer greater than 0) is a quantity of symbols offset in the first time-frequency resource in time domain.

Optionally, when the plurality of symbols are distributed at intervals in time domain, the method 400 may further include: The communication apparatus receives or sends second information, where the second information includes at least one offset $B_t$ and a quantity of contiguous symbols. A maximum value of offsets is a quantity C of time domain symbols included in the first time-frequency resource (where C is an integer greater than 0).

It should be understood that the second information may be carried in a broadcast message, RRC signaling, or DCI, or a quantity of symbols with at least one interval and a quantity of contiguous symbols are determined in a predefined manner.

For example, a time domain symbol position of the first time-frequency resource is $\{l_0, l_1, ..., l_{c-1}\}$, offsets determined based on the second information are $B_{t0}, B_{t1}, ...,$ and $B_{tc-1}$, and a time domain symbol position $\{l_0 + B_{t0}, l_1 + B_{t1}, ..., l_{c-1} + B_{tc-1}\}$ is obtained by adding the offsets to the time domain symbol position $\{l_0, l_1, ..., l_{c-1}\}$. $B_{t0}, Bt_1, ...,$ and $B_{tc-1}$ may be the same or may be different, values of the offsets are all integers greater than 0, and c is an integer greater than 0 and less than C.

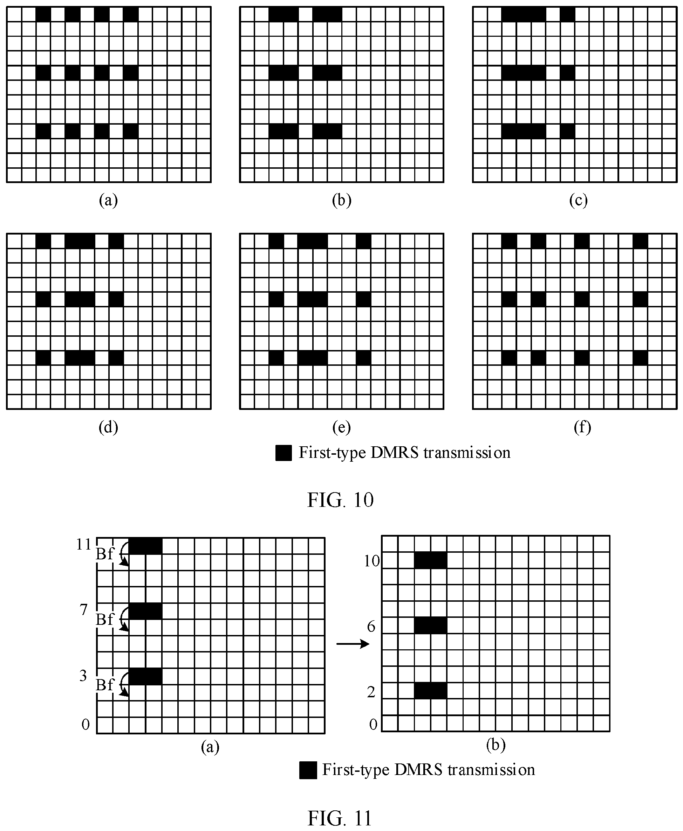

The following uses the first-type DMRS pattern shown in (b) in FIG. 8 as an example to describe, with reference to FIG. 10, a plurality of manners in which a plurality of symbols are distributed at intervals.

FIG. 10 is a diagram of a plurality of manners of distribution at intervals according to an embodiment of this application. As shown in (a) in FIG. 10, a first-type DMRS occupies four symbols in time domain, and there is an interval between every two symbols. This manner of distribution at intervals may be referred to as distribution at even intervals. As shown in (b) in FIG. 10, the first-type DMRS occupies four symbols in time domain, two of the four symbols are contiguously distributed, and two contiguously distributed symbols are distributed at intervals from two other contiguously distributed symbols . As shown in (c) in FIG. 10, the first-type DMRS occupies four symbols in time domain, three of the four symbols are contiguously distributed, and the three contiguously distributed symbols are distributed at intervals from the remaining one symbol. As shown in (d) in FIG. 10, the first-type DMRS occupies four symbols in time domain, two of the four symbols are contiguously distributed, the two contiguously distributed symbols are distributed at intervals of one symbol from each of the remaining two symbols. This manner of distribution at intervals may be referred to as distribution at even intervals. As shown in (e) in FIG. 10, the first-type DMRS occupies four symbols in time domain, two of the four symbols are contiguously distributed, and the two contiguously distributed symbols are distributed at intervals of one symbol and two symbols from the remaining two symbols respectively. This manner of distribution at intervals may be referred to as distribution at uneven intervals. As shown in (f) in FIG. 10, the first-type DMRS occupies four symbols in time domain, the four symbols are sequentially distributed at intervals of one symbol, two symbols, and three symbols, and this manner of distribution at intervals may be referred to as distribution at uneven intervals.

In an optional embodiment, the first time-frequency resource is offset by at least one offset $B_f$ (where $B_f$ is an integer greater than 0) in frequency domain, and the at least one offset indicates a quantity of subcarriers offset in the first time-frequency resource in frequency domain.

Optionally, the offset $B_f$ may be carried in the second information, or the communication apparatus determines the offset $B_f$ by sending or receiving third information. For example, the communication apparatus sends or receives the third information, where the third information includes at least one offset $B_f$.

It should be understood that the third information may be carried in a broadcast message, RRC signaling, or DCI, or a quantity of symbols with at least one interval and a quantity of contiguous symbols are determined in a predefined manner.

FIG. 11 shows a frequency domain offset manner according to an embodiment of this application. As shown in (a) in FIG. 11, indexes of a first time-frequency resource in frequency domain are (3, 7, and 11). When an offset $B_f$ is one subcarrier, a pattern shown in (b) in FIG. 11 may be obtained. As shown in (b) in FIG. 11, indexes of the first time-frequency resource in frequency domain are (2, 6, and 10).

It should be understood that an offset in frequency domain may be a downward offset of $B_f$ subcarriers, or may be an upward offset of $B_f$ subcarriers shown in (a) in FIG. 11.

In an optional embodiment, a quantity of orthogonal ports of a first-type DMRS is the same as or different from a quantity of orthogonal ports of a second-type DMRS.

It should be noted that, quantities of orthogonal ports may be different between the two types of DMRSs. This is because frequency domain density of the first-type DMRS is less than frequency domain density of the second-type DMRS, and therefore a spare frequency domain resource may be used to define more orthogonal ports.

For example, when an orthogonal port is added, the added orthogonal port may be indicated through a reserved index in an antenna port, or may be indicated by increasing a quantity of bits that indicate the antenna port in DCI.

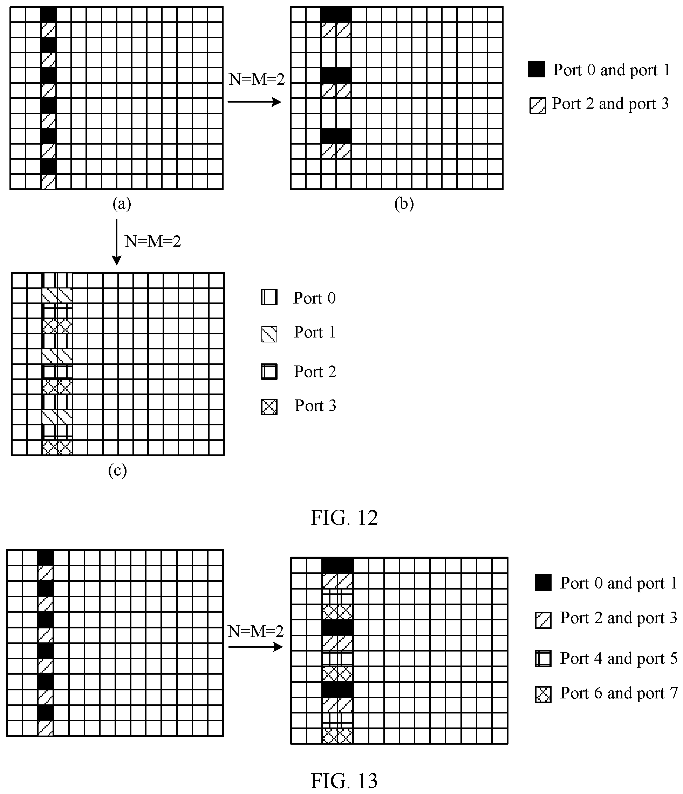

With reference to FIG. 12 and FIG. 13, the following separately describes a method for defining an orthogonal port when quantities of orthogonal ports are the same and different.

FIG. 12 shows a method for defining an orthogonal port according to an embodiment of this application. As shown in (a) in FIG. 12, a quantity of orthogonal ports of a second-type DMRS is four, and the orthogonal ports are implemented through time domain orthogonality, frequency domain orthogonality, and code domain orthogonality. When N=M=2, a first-type DMRS pattern shown in (b) in FIG. 12 or in (c) in FIG. 12 is obtained.

As shown in (b) in FIG. 12, a quantity of orthogonal ports of the first-type DMRS does not change, and an orthogonal manner does not change.

As shown in (c) in FIG. 12, the quantity of orthogonal ports of a first-type DMRS does not change, but the orthogonal manner changes. The orthogonal manner is changed from the original time domain orthogonality, frequency domain orthogonality, and code domain orthogonality to time domain orthogonality and frequency domain orthogonality, with no code domain orthogonality. That is, in the foregoing formula (1), $w_f(k')$ may be always 1.

FIG. 13 shows another method for defining an orthogonal port according to an embodiment of this application. As shown in (a) in FIG. 13, a quantity of orthogonal ports of a second-type DMRS is four, and the orthogonal ports are implemented through time domain orthogonality, frequency domain orthogonality, and code domain orthogonality. When N=M=2, a first-type DMRS pattern shown in (b) in FIG. 13 is obtained. As shown in (b) in FIG. 13, a quantity of orthogonal ports of the first-type DMRS changes: The quantity of orthogonal ports is increased from four to eight, but an orthogonal manner does not change. The orthogonal ports are still implemented through time domain orthogonality, frequency domain orthogonality, and code domain orthogonality. Certainly, if orthogonality of polarization domain or another orthogonal manner is further considered, design flexibility may be further improved. A principle is similar, and details are not described herein again.

In an optional embodiment, an index $k1$ of a subcarrier included in the first time-frequency resource in frequency domain satisfies:

$$k1 = N \cdot (4n + 2k') + \Delta \qquad (4)$$

n is a natural number, a value of $k'$ is 0 or 1, and a value of $\Delta$ is an integer greater than or equal to 0 and less than or equal to 2N-1.

For example, when the index of the subcarrier is determined, $k1$ determined by traversing each value of n when $k'$=0 may be calculated, and $k1$ determined by traversing each value of n when $k'$=1 may be calculated. If indexes in frequency domain are 0 to 11, a maximum value of $k1$ may be 11.

In an optional embodiment, an index $k2$ of a subcarrier included in the first time-frequency resource in frequency domain satisfies:

$$k2 = N \cdot 6n + k' + \Delta \qquad (5)$$

n is a natural number, a value of $k'$ is 0 or 1, and a value of $\Delta$ is an integer greater than or equal to 0 and less than or equal to 2N-1.

For example, when the index of the subcarrier is determined, $k2$ determined by traversing each value of n when $k'$=0 is calculated, and $k2$ determined by traversing each value of n when $k'$=1 is calculated. If indexes in frequency domain are 0 to 11, a maximum value of $k1$ may be 11.

It should be understood that the value of $\Delta$ may be determined based on a port number. For example, in (b) in FIG. 12, a correspondence between the value of $\Delta$ and the port number may be that a port 0 and a port 1 correspond to $\Delta$=0, and a port 2 and a port 3 correspond to $\Delta$=1. In (c) in FIG. 12, a port 0 corresponds to $\Delta$=0, a port 1 corresponds to $\Delta$=1, a port 2 corresponds to $\Delta$=2, and a port 3 corresponds to $\Delta$=3.

Both formula (4) and formula (5) can be used to determine the index of the subcarrier. A specific formula used in actual communication may be determined based on a configuration type of the first-type DMRS. For example, when frequency domain density of the first-type DMRS is 1/N times 1/2, an index of a subcarrier spacing is determined by using formula (4); or when frequency domain density of the first-type DMRS is 1/N times 1/3, an index of a subcarrier spacing is determined by using formula (5).

It should be understood that the frequency domain offset $B_f$ mentioned above may be implemented by changing the value of $\Delta$. For example, the value of $\Delta$ in formula (4) is $\{\Delta_0, \Delta_1, \ldots, \Delta_{n-1}\}$, and after the offset $B_f$ is added, a value of $\Delta$ is $\{\Delta_0 + B_{f0}, \Delta_1 + B_{f1}, \ldots, \Delta_{n-1} + B_{fn-1}\}$, where $B_{f0}, B_{f1}, \ldots$, and $B_{fn-1}$ may be the same or may be different.

In an optional embodiment, an index $l$ of the symbol included in the first time-frequency resource in time domain satisfies:

$$l = \bar{l} + M \cdot l' + \tilde{l}.$$

Values of both $l'$ and $\tilde{l}$ are 0 or 1, and $\bar{l}$ is a natural number less than M. The value of $\bar{l}$ may be indicated by high-level signaling, to represent a position at which a start position of a slot is offset by $\bar{l}$. For example, $\bar{l}$=2 or 3.

It should be noted that, after the index of the first time-frequency resource in frequency domain and the index of the first time-frequency resource in time domain are determined, the first DMRS may be mapped to a corresponding resource element according to a mapping rule provided in the foregoing formula (3). For example, a DMRS type 1 single symbol in an NR standard is used as an example. When an antenna port number p is 1000, $\Delta$=0, and $l'$=0. When n=0 and $k'$=0, k=0 and $l$=$\bar{l}$. If $\bar{l}$=2, $l$=2. To be specific, an element r(0) whose index is 0 in a sequence r is mapped to an RB whose index in time domain is 2 and index in frequency domain is 0.

Optionally, for values of parameters in the foregoing formula (4) and formula (5), refer to values of related parameters in the foregoing formula (1) and formula (2); or a new value may be redefined. This is not limited herein.

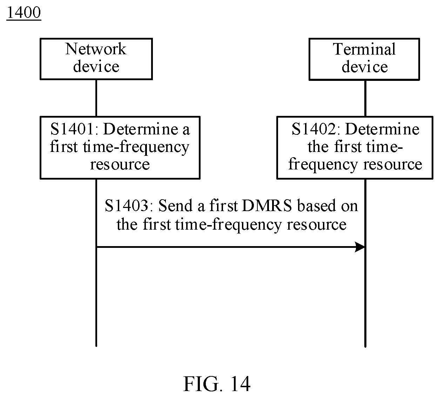

Based on the embodiment shown in FIG. 4, the following uses downlink transmission as an example to describe in detail a DMRS transmission method provided in an embodiment of this application with reference to FIG. 14.

In a flowchart shown in FIG. 14, the method is described from a perspective of interaction between a terminal device and a network device, but this application does not limit an execution body of the method. For example, the terminal device in FIG. 14 may alternatively be a chip, a chip system, or a processor that supports the terminal device in implementing the method, or may be a logical module or software that can implement all or some functions of the terminal device. The network device in FIG. 14 may alternatively be a chip, a chip system, or a processor that supports the network device in implementing the method, or may be a logical module or software that can implement all or some functions of the network device.

FIG. 14 is a schematic flowchart of another DMRS transmission method 1400 according to an embodiment of this application. As shown in FIG. 14, the method 1400 may include S1401 to S1403. The following describes in detail the steps in the method 1400.

S1401: The network device determines a first time-frequency resource.

S1402: The terminal device determines the first time-frequency resource.

For descriptions of the first time-frequency resource, refer to the descriptions in S401.

Optionally, the terminal device may determine the first time-frequency resource in any one of the following possible implementations.

In a first possible implementation, the network device indicates a first coefficient N and a second coefficient M to the terminal device. For example, the network device sends first information to the terminal device, where the first information indicates the first coefficient N and the second coefficient M. For descriptions of the first information, refer to related descriptions in the method 400. Details are not described herein again.

In a second possible implementation, the terminal device determines the first time-frequency resource in a predefined manner. For example, in a terrestrial cellular communication scenario, a second-type DMRS is used to perform channel estimation. When a channel changes due to a change of a communication environment (for example, the channel changes to an LOS channel), the terminal device determines the first time-frequency resource by using a predetermined first coefficient N and a predetermined second coefficient M.

It should be understood that sequence numbers of S1401 and S1402 do not mean an execution sequence. The execution sequence of the processes should be determined based on functions and internal logic of the processes. For example, S1401 may be performed before S1402; S1402 may be performed before S1401; or S1401 and S1402 may be simultaneously performed.

S1403: The network device sends a first DMRS to the terminal device based on the first time-frequency resource. Correspondingly, the terminal device receives the first DMRS based on the first time-frequency resource.

It should be understood that a time-frequency resource for transmission of the second-type DMRS in this embodiment of this application may be specified in a protocol, or may be predefined in some embodiments. In other words, a time-frequency resource occupied by the first-type DMRS in this embodiment of this application is an improvement on a time-frequency resource occupied by an existing DMRS.

In this embodiment of this application, the network device sends the first DMRS (where the first DMRS belongs to the first-type DMRS) to the terminal device based on the determined first time-frequency resource. After receiving the first DMRS based on the determined first time-frequency resource, the terminal device performs channel estimation based on the first DMRS. If M=1, because frequency domain density in the time-frequency resource for transmission of the first-type DMRS in at least one RB decreases, the communication apparatus may therefore use more time-frequency resources to perform data transmission. This not only reduces a resource waste, but also improves a throughput. If M≠1, a quantity of time domain symbols in the time-frequency resource for transmission of the first-type DMRS in the at least one RB increases. In this way, when the communication apparatus uses the first-type DMRS to perform channel estimation, channel estimation precision can be improved, and receiving performance of the communication apparatus can be improved.

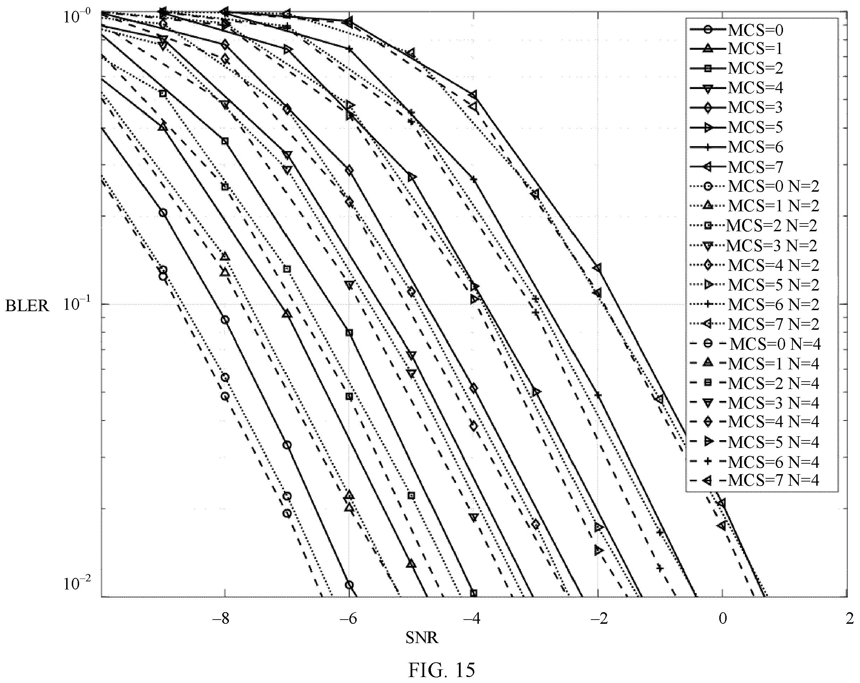

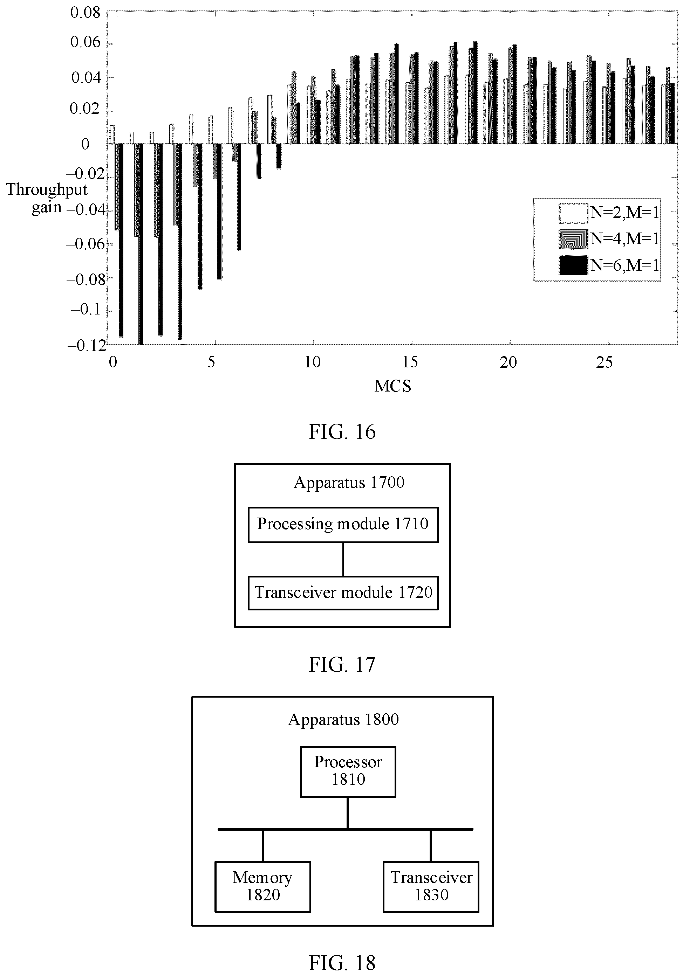

The foregoing describes in detail a feature of the first-type DMRS and beneficial effects brought by using the first-type DMRS to perform channel estimation. With reference to FIG. 15 and FIG. 16, the following describes performance gains brought by using the first-type DMRS provided in embodiments of this application in a low-order MCS (low signal-to-noise ratio) when N and M have different values.

FIG. 15 is a diagram of block error rate performance comparison according to an embodiment of this application. As shown in FIG. 15, block error rate (block error rate, BLER) performance reflects channel estimation precision. When N=M=2, and index values of the MCS are 0 to 2, a gain of about 0.5 dB (dB) is obtained when the BLER=1E$^{-1}$. When N=M=2, and index values of the MCS are 3 to 7, a gain of about 0.1 dB to 0.2 dB is obtained when the BLER=1E$^{-1}$. In comparison with a gain obtained when N=M=2, and index values of the MCS are 0 to 6, when N=M=4, and index values of the MCS are 0 to 6, a gain of 0.1 dB to 0.2 dB may be obtained when the BLER=1E[-1].

FIG. 16 is a diagram of a throughput gain according to an embodiment of this application. As shown in FIG. 16, a horizontal coordinate represents indexes (0 to 28) of an MCS, and a vertical coordinate represents throughput gains corresponding to different index values of the MCS. Each index of the MCS corresponds to three groups of throughput gains with different values ({N=2,M=1}, {N=4,M=1}, and {N=6,M=1}). It can be learned that when {N=2,M=1}, a maximum throughput gain close to 4% can be obtained; when {N=4 M=1}, and {N=6,M=1}, a maximum throughput gain close to 6% can be obtained.

It should be understood that sequence numbers of the foregoing processes do not mean an execution sequence. The execution sequence of the processes should be determined based on functions and internal logic of the processes, and should not be construed as any limitation on implementation processes of embodiments of this application.

With reference to FIG. 4 to FIG. 16, the foregoing describes in detail the method in embodiments of this application in detail. With reference to FIG. 17 and FIG. 18, the following describes in detail an apparatus in embodiments of this application.

FIG. 17 shows a communication apparatus 1700 according to an embodiment of this application. As shown in FIG. 17, the apparatus 1700 includes a processing module 1710 and a transceiver module 1720.

For example, the processing module 1710 is configured to determine a first time-frequency resource. The first time-frequency resource is a resource that is in at least one resource block RB and that is for transmission of a first-type demodulation reference signal DMRS, frequency domain density of the first-type DMRS is 1/N of frequency domain density of a second-type DMRS, a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, where N is an integer greater than 1, and M is an integer greater than 0. The transceiver module 1720 is configured to send or receive a first DMRS based on the first time-frequency resource, where the first DMRS belongs to the first-type DMRS.

Optionally, N=M.

Optionally, the transceiver module 1720 is further configured to receive first information, where the first information indicates a first coefficient N and a second coefficient M.

Optionally, the transceiver module 1720 is further configured to send first information, where the first information indicates a first coefficient N and a second coefficient M.

Optionally, the first information includes the first coefficient N and the second coefficient M.

Optionally, the first information includes a first parameter value, and the first parameter value corresponds to the first coefficient N and the second coefficient M.

Optionally, the first parameter value includes an index value of a modulation and coding scheme MCS or a value of an elevation angle of satellite communication.

Optionally, the first time-frequency resource includes a plurality of symbols in time domain, and the plurality of symbols are contiguously distributed in time domain.

Optionally, the first time-frequency resource includes a plurality of symbols in time domain, and the plurality of symbols are distributed at intervals in time domain.

Optionally, an index $k1$ of a subcarrier included in the first time-frequency resource in frequency domain satisfies:

$$k1 = N \cdot (4n + 2k') + \Delta.$$

n is a natural number, a value of $k'$ is 0 or 1, $\Delta$ is an integer greater than or equal to 0 and less than or equal to 2N-1, and a value of $\Delta$ is determined based on a port number.

Optionally, an index $k2$ of a subcarrier included in the first time-frequency resource in frequency domain satisfies:

$$k2 = N \cdot 6n + k' + \Delta.$$

n is a natural number, a value of $k'$ is 0 or 1, $\Delta$ is an integer greater than or equal to 0 and less than or equal to 2N-1, and a value of $\Delta$ is determined based on a port number.

Optionally, an index $l$ of the symbol included in the first time-frequency resource in time domain satisfies:

$$l = \bar{l} + M \cdot l' + \tilde{l}.$$

Values of both $l'$ and $\bar{l}$ are 0 or 1, $\tilde{l}$ is a natural number less than M, and a value of $\bar{l}$ is configured by the communication apparatus.

In a possible implementation, the apparatus 1700 is a terminal device, or a chip or a chip system in a terminal device.

In another possible implementation, the apparatus 1700 is a network device, or a chip or a chip system in a network device.

It should be understood that the apparatus 1700 is represented in the form of a functional module. The term "module" herein may be an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1700 may be specifically the communication apparatus, the terminal device, or the network device in the foregoing embodiments, or that a function of the communication apparatus, the terminal device, or the network device in the foregoing embodiments may be integrated in the apparatus 1700. The apparatus 1700 may be configured to perform various procedures and/or steps corresponding to the communication apparatus, the terminal device, or the network device in the foregoing method embodiments. To avoid repetitions, details are not described herein again.

The apparatus 1700 has a function of implementing the corresponding steps performed by the communication apparatus, the terminal device, or the network device, and the function may be implemented by using hardware, or may be implemented by using hardware executing corresponding software. The hardware or the software includes one or more modules corresponding to the function. For example, the processing module 1710 may be a communication interface like a transceiver interface.

FIG. 18 shows another communication apparatus 1800 according to an embodiment of this application. The apparatus 1800 includes a processor 1810, a memory 1820, and a transceiver 1830. The processor 1810, the memory 1820, and the transceiver 1830 are connected via an internal connection path. The memory 1820 is configured to store instructions, and the processor 1810 is configured to execute the instructions stored in the memory 1820, to enable the apparatus 1800 to perform the communication method provided in the foregoing method embodiments.

It should be understood that the function of the apparatus 1700 in the foregoing embodiment may be integrated in the apparatus 1800, and the apparatus 1800 can be configured to perform the various steps and/or procedures corresponding to the communication apparatus in the foregoing method embodiments, or the apparatus 1800 can be configured to perform the various steps and/or procedures corresponding to the terminal device in the foregoing method embodiments, or the apparatus 1800 can be configured to perform the various steps and/or procedures corresponding to the network device in the foregoing method embodiments.

Optionally, the memory 1820 may include only a read-only memory and a random access memory, and provide instructions and data for the processor. A part of the memory may further include a non-volatile random access memory. For example, the memory may further store information of a device type. The processor 1810 may be configured to execute the instructions stored in the memory, and when the processor executes the instructions, the processor 1810 may perform the steps and/or procedures corresponding to the terminal device in the foregoing method embodiments, or the processor 1810 may perform steps and/or procedures corresponding to the network device in the foregoing method embodiments, or the apparatus 1800 may be further configured to perform steps and/or procedures corresponding to the communication apparatus in the foregoing method embodiments.

It should be understood that in embodiments of this application, the processor 1810 may be a central processing unit (central processing unit, CPU), or the processor 1810 may be another general-purpose processor, digital signal processor (digital signal processor, DSP), ASIC, field programmable gate array (field programmable gate array, FPGA) or another programmable logic device, discrete gate or transistor logic device, discrete hardware component, or the like. The processor 1810 may be a microprocessor, or the processor 1810 may be any conventional processor or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art like a random access memory, a flash memory, a read-only memory, a programmable read-only memory, an electrically erasable programmable memory, or a register. The storage medium is located in the memory, and a processor executes instructions in the memory and completes the steps in the foregoing methods in combination with hardware of the processor. To avoid repetitions, details are not described herein again.

This application further provides a computer-readable storage medium. The computer-readable storage medium stores a computer program. When the computer program is executed by a computer, the method in any one of the foregoing method embodiments is implemented.

This application further provides a computer program product. When the computer program product is executed by a computer, the method in any one of the foregoing method embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A demodulation reference signal transmission method, applied to a communication apparatus, wherein the method comprises:

    determining a first time-frequency resource, wherein the first time-frequency resource is a resource that is in at least one resource block RB and that is for transmission of a first-type demodulation reference signal DMRS, frequency domain density of the first-type DMRS is 1/N of frequency domain density of a second-type DMRS, a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, wherein N is an integer greater than 1, and M is an integer greater than 0; and
    sending or receiving a first DMRS based on the first time-frequency resource, wherein the first DMRS belongs to the first-type DMRS.

2. The method according to claim 1, wherein N=M.

3. The method according to claim 1 or 2, wherein the method further comprises:
    receiving first information, wherein the first information indicates a first coefficient N and a second coefficient M.

4. The method according to claim 1 or 2, wherein the method further comprises:
    sending first information, wherein the first information indicates a first coefficient N and a second coefficient M.

5. The method according to claim 3 or 4, wherein the first information comprises the first coefficient N and the second coefficient M.

6. The method according to claim 3 or 4, wherein the first information comprises a first parameter value, and the first parameter value corresponds to the first coefficient N and the second coefficient M.

7. The method according to claim 6, wherein the first parameter value comprises an index value of a modulation and coding scheme MCS or a value of an elevation angle of satellite communication.

8. The method according to any one of claims 1 to 7, wherein the first time-frequency resource comprises a plurality of symbols in time domain, and the plurality of symbols are contiguously distributed in time domain.

9. The method according to any one of claims 1 to 7, wherein the first time-frequency resource comprises a plurality of symbols in time domain, and the plurality of symbols are distributed at intervals in time domain.

10. The method according to any one of claims 1 to 9, wherein an index $k1$ of a subcarrier comprised in the first time-frequency resource in frequency domain satisfies:

$$k1 = N \cdot (4n + 2k') + \Delta,$$

wherein

n is a natural number, a value of $k'$ is 0 or 1, $\Delta$ is an integer greater than or equal to 0 and less than or equal to 2N-1, and a value of $\Delta$ is determined based on a port number.

11. The method according to any one of claims 1 to 9, wherein an index $k2$ of a subcarrier comprised in the first time-frequency resource in frequency domain satisfies:

$$k2 = N \cdot 6n + k' + \Delta,$$

wherein

n is a natural number, a value of $k'$ is 0 or 1, $\Delta$ is an integer greater than or equal to 0 and less than or equal to 2N-1, and a value of $\Delta$ is determined based on a port number.

12. The method according to any one of claims 1 to 11, wherein an index $l$ of the symbol comprised in the first time-frequency resource in time domain satisfies:

$$l = \bar{l} + M \cdot l' + \tilde{l},$$

wherein

a value of $l'$ is 0 or 1, $\tilde{l}$ is a natural number less than M, and a value of $\bar{l}$ is configured by the communication apparatus.

13. The method according to any one of claims 3 to 7, wherein the first information is carried in one or more of the following signaling: a broadcast message, radio resource control RRC signaling, or downlink control information DCI.

14. A communication apparatus, comprising:

a processing module, configured to determine a first time-frequency resource, wherein the first time-frequency resource is a resource that is in at least one resource block RB and that is for transmission of a first-type demodulation reference signal DMRS, frequency domain density of the first-type DMRS is 1/N of frequency domain density of a second-type DMRS, a quantity of symbols occupied by the first-type DMRS in the at least one RB is M times a quantity of symbols occupied by the second-type DMRS in the at least one RB, and a time-frequency resource for transmission of the second-type DMRS is determined in a predefined configuration manner, wherein N is an integer greater than 1, and M is an integer greater than 0; and
a transceiver module, configured to send or receive a first DMRS based on the first time-frequency resource, wherein the first DMRS belongs to the first-type DMRS.

15. The apparatus according to claim 14, wherein N=M.

16. The apparatus according to claim 14 or 15, wherein the transceiver module is further configured to:

receive first information, wherein the first information indicates a first coefficient N and a second coefficient M.

17. The apparatus according to claim 14 or 15, wherein the transceiver module is further configured to:
send first information, wherein the first information indicates a first coefficient N and a second coefficient M.

18. The apparatus according to claim 16 or 17, wherein the first information comprises the first coefficient N and the second coefficient M.

19. The apparatus according to claim 16 or 17, wherein the first information comprises a first parameter value, and the first parameter value corresponds to the first coefficient N and the second coefficient M.

20. The apparatus according to claim 19, wherein the first parameter value comprises an index value of a modulation and coding scheme MCS or a value of an elevation angle of satellite communication.

21. The apparatus according to any one of claims 14 to 20, wherein the first time-frequency resource comprises a plurality of symbols in time domain, and the plurality of symbols are contiguously distributed in time domain.

22. The apparatus according to any one of claims 14 to 20, wherein the first time-frequency resource comprises a plurality of symbols in time domain, and the plurality of symbols are distributed at intervals in time domain.

23. The apparatus according to any one of claims 14 to 22, wherein an index $k1$ of a subcarrier comprised in the first time-frequency resource in frequency domain satisfies:

$$k1 = N \cdot (4n + 2k') + \Delta,$$

wherein
$n$ is a natural number, a value of $k'$ is 0 or 1, $\Delta$ is an integer greater than or equal to 0 and less than or equal to 2N-1, and a value of $\Delta$ is determined based on a port number.

24. The apparatus according to any one of claims 14 to 22, wherein an index $k2$ of a subcarrier comprised in the first time-frequency resource in frequency domain satisfies:

$$k2 = N \cdot 6n + k' + \Delta,$$

wherein
$n$ is a natural number, a value of $k'$ is 0 or 1, $\Delta$ is an integer greater than or equal to 0 and less than or equal to 2N-1, and a value of $\Delta$ is determined based on a port number.

25. The apparatus according to any one of claims 14 to 24, wherein an index $l$ of the symbols comprised in the first time-frequency resource in time domain satisfies:

$$l = \bar{l} + M \cdot l' + \tilde{l},$$

wherein
a value of $l'$ is 0 or 1, $\tilde{l}$ is a natural number less than M, and a value of $\bar{l}$ is configured by the communication apparatus.

26. The apparatus according to any one of claims 16 to 20, wherein the first information is carried in one or more of the following signaling: a broadcast message, radio resource control RRC signaling, or downlink control information DCI.

27. A communication apparatus, comprising a processor, wherein the processor is configured to execute a computer program, to enable the communication apparatus to implement the method according to any one of claims 1 to 13.

28. The apparatus according to claim 27, wherein the apparatus further comprises a memory, and the memory is configured to store the computer program.

29. A computer-readable storage medium, wherein the computer-readable storage medium stores a computer program, and when the computer program is executed by a processor, the method according to any one of claims 1 to 13 is implemented.

30. A computer program product, comprising a computer program, wherein when the computer program is run, the method according to any one of claims 1 to 13 is implemented.

31. A communication system, comprising at least one communication apparatus, wherein the at least one communication apparatus is configured to implement the method according to any one of claims 1 to 13.

100

110

120

FIG. 1

(a)

(b)

■ DMRS

FIG. 2

(a)

(b)

■ DMRS

FIG. 3

400

A communication apparatus determines a first time-frequency resource — S401

The communication apparatus sends or receives a first DMRS based on the first time-frequency resource — S402

FIG. 4

N=M=2

(a)                                      (b)

■ Second-type DMRS              ■ First-type DMRS

FIG. 5

(a)

■ Second-type DMRS

N=M=4
→

(b)

███ First-type DMRS

FIG. 6

(a)

■ Second-type DMRS

N=2
M=1
→

(b)

⊠ First-type DMRS

FIG. 7

(a)                                    (b)

N=2
M=4

■ Second-type DMRS          ■ First-type DMRS

FIG. 8

N=M=2

N=2
M=1

N=2

M=4

■ Second-type DMRS

⊠ First-type DMRS

(a)

(b)

(c)

(d)

FIG. 9

(a)  (b)  (c)

(d)  (e)  (f)

■ First-type DMRS transmission

FIG. 10

(a)  (b)

■ First-type DMRS transmission

FIG. 11

N=M=2

Port 0 and port 1

Port 2 and port 3

(a)                    (b)

N=M=2

Port 0

Port 1

Port 2

Port 3

(c)

FIG. 12

N=M=2

Port 0 and port 1

Port 2 and port 3

Port 4 and port 5

Port 6 and port 7

FIG. 13

1400

```
┌──────────┐                    ┌──────────┐
│ Network  │                    │ Terminal │
│ device   │                    │ device   │
└──────────┘                    └──────────┘
```

S1401: Determine a first time-frequency resource

S1402: Determine the first time-frequency resource

S1403: Send a first DMRS based on the first time-frequency resource

FIG. 14

FIG. 15

FIG. 16

FIG. 17

FIG. 18

## INTERNATIONAL SEARCH REPORT

| International application No. |
| --- |
| **PCT/CN2023/140023** |

| A. | CLASSIFICATION OF SUBJECT MATTER |
| --- | --- |

H04L25/02(2006.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT; CNKI; ENTXTC; DWPI; IEEE; 3GPP: 解调参考信号, 第一类, 时频资源, 资源块, 符号数, 频域密度, demodulation reference signal, DMRS, first, time-frequency resource, resource block, RB, symbols, frequency density

| C. | DOCUMENTS CONSIDERED TO BE RELEVANT | | |
| --- | --- | --- | --- |

| Category* | Citation of document, with indication, where appropriate, of the relevant passages | Relevant to claim No. |
| --- | --- | --- |
| A | WO 2021228467 A1 (SONY GROUP CORPORATION) 18 November 2021 (2021-11-18) description, page 1, line 21 to page 5, line 16 | 1-31 |
| A | CN 109391448 A (HUAWEI TECHNOLOGIES CO., LTD.) 26 February 2019 (2019-02-26) entire document | 1-31 |
| A | CN 112714497 A (HUAWEI TECHNOLOGIES CO., LTD.) 27 April 2021 (2021-04-27) entire document | 1-31 |
| A | CN 113852583 A (JIANGSU HENGXIN ZHONGLIAN COMMUNICATION TECHNOLOGY CO., LTD.) 28 December 2021 (2021-12-28) entire document | 1-31 |
| A | HUAWEI et al. ""Design of DL DMRS for data transmission"" *3GPP TSG RAN WG1 Meeting #89 R1-1706933*, 19 May 2017 (2017-05-19), entire document | 1-31 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 March 2024** | **11 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140023**

| Patent document cited in search report | | | Publication date (day/month/year) | Patent family member(s) | | | Publication date (day/month/year) |
|---|---|---|---|---|---|---|---|
| WO | 2021228467 | A1 | 18 November 2021 | US | 2023163932 | A1 | 25 May 2023 |
| | | | | EP | 4150824 | A1 | 22 March 2023 |
| | | | | CN | 115769537 | A | 07 March 2023 |
| CN | 109391448 | A | 26 February 2019 | WO | 2019029338 | A1 | 14 February 2019 |
| | | | | EP | 3595226 | A1 | 15 January 2020 |
| | | | | US | 2020186311 | A1 | 11 June 2020 |
| CN | 112714497 | A | 27 April 2021 | US | 2023047000 | A1 | 16 February 2023 |
| CN | 113852583 | A | 28 December 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211641372